# EUROPÄISCHE PATENTSCHRIFT

(11) **EP 3 081 517 B1**
(45) Veröffentlichungstag und Bekanntmachung des Hinweises auf die Patenterteilung: **25.10.2017**
(21) Anmeldenummer: 15164104.0
(22) Anmeldetag: 17.04.2015
(51) Int. Cl.: B65H 51/10, B65H 51/14, H02G 1/12

(54) **VORRICHTUNG ZUM FÜHREN UND FÖRDERN VON DRAHT- ODER STRANGFÖRMIGEN PRODUKTEN**
DEVICE FOR GUIDING AND TRANSPORTING PRODUCTS HAVING THE FORM OF WIRE OR ELONGATED ELEMENTS
DISPOSITIF DESTINÉ À DIRIGER ET TRANSPORTER DES PRODUITS EN FORME DE TRONÇON OU DE FIL

(43) Veröffentlichungstag der Anmeldung: 19.10.2016
(73) Patentinhaber: Schleuniger Holding AG, 3608 Thun (CH)
(72) Erfinder: Rychener, Jörg, 3612 Steffisburg (CH); Lüthi, Marcel, 3535 Zäzivil (CH); Steuri, Roger, 3608 Thun (CH)
(74) Vertreter: Patentbüro Paul Rosenich AG

(56) Entgegenhaltungen:
- WO-A1-97/17751
- JP-A- 2003 087 923
- US-A- 4 275 619
- US-A1- 2001 023 884

## Beschreibung

Die Erfindung betrifft eine Vorrichtung zum Führen und Fördern von draht-oder strangförmigen Produkten als Transportantrieb, zum Beispiel einem Kabel in einer Kabelbearbeitungsanlage, insbesondere einer Kabelabisolieranlage, nach dem Oberbegriff des Anspruchs 1, sowie eine Kabelbearbeitungsanlage, insbesondere Kabelabisolieranlage oder Kabelschneidmaschine, mit zumindest einer Kabelbearbeitungsanordnung und mindestens einer Vorrichtung zum Führen und Fördern des Kabels, nach dem Oberbegriff des Anspruchs 10.

Transportantriebe sind neben den eigentlichen Bearbeitungsanordnungen sehr wichtige Baugruppen von Kabelbearbeitungsanlagen, wie beispielsweise von automatischen Kabelabisoliermaschinen. Sie haben die Aufgabe das Kabel zu transportieren, es zur Bearbeitung axial präzise zu positionieren, während der Bearbeitung allenfalls eine Kraftübertragung auf das Kabel zu bewerkstelligen sowie das Kabel nach der Bearbeitung zu greifen bzw. aufzufangen und aus dem Bereich der Bearbeitungsanlage weg zu transportieren. Die beiden ersten Aufgaben, nämlich Transport und Positionierung, können durch Rollen oder Bänder mit genügender Auflösung gelöst werden. Die dritte Aufgabe der Kraftübertragung erfordert eine entsprechende Auslegung der Motoren und Getriebe sowie eine geeignete Material- und Oberflächenwahl des Rollen- bzw. Bandmaterials.

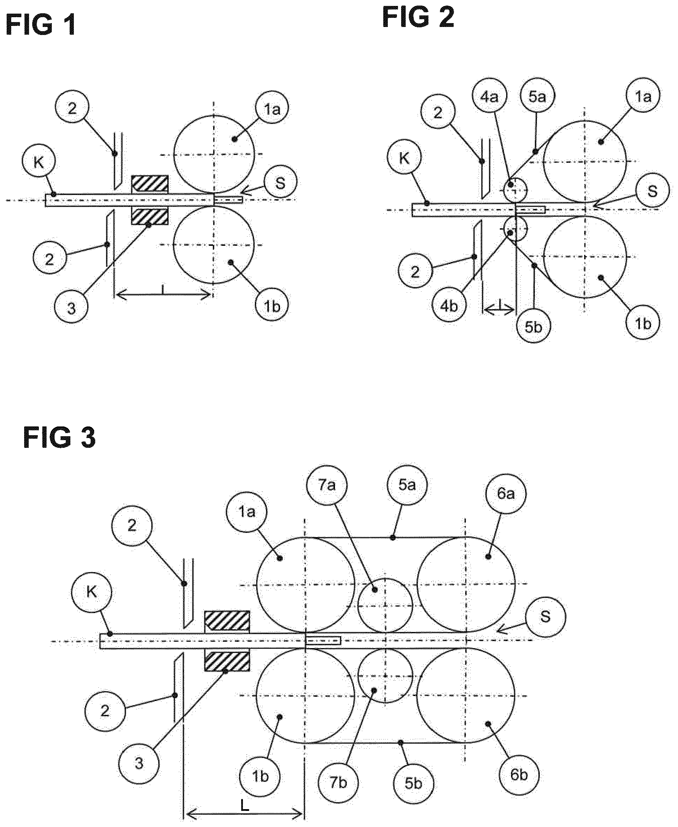

Die letzte Aufgabe des Führens schliesslich wird bei den meisten Konfigurationen von Maschinen bzw. Anlagen zur Bearbeitung von draht-oder strangförmigen Produkten mit einer Führung am Ausgang der Bearbeitungsanordnung gelöst, die das Kabel in den nachfolgenden Antrieb mit Rollen oder Bändern führt (siehe Fig. 1 und Fig. 3). Dadurch ergibt sich eine kürzest mögliche Kabellänge (Länge L in Fig. 1), da das Kabel mit seiner Isolation zwischen den Rollen oder Bändern stehen muss, bevor es beispielsweise geschnitten wird und damit es anschliessend weiter transportiert werden kann. Ist für das Kabel auch am zweiten Kabelende ebenfalls ein Abzug vorgesehen, dann wird die minimale Kabellänge nochmals um diese Abzugslänge am zweiten Kabelende länger. Die kürzeste Kabellänge ist damit die Summe aus dem Abstand der Begrenzung der Bearbeitungsachse der Bearbeitungsanordnung zu der Achse der Rolle bzw. der der Bearbeitungsanordnung zugewandten Führungsrolle des Bandantriebes und der Abisolierlängen der beiden Kabelenden.

In der Praxis gibt es aber Anwendungen, die viel kürzere Kabellängen erfordern. Dazu wurde vorgeschlagen, die ausgangsseitige Führung wegzulassen und an dieser Stelle kleinere Rollen zu setzen. Diese kleineren Rollen werden zusammen mit den grösseren Rollen betrieben, wobei die Rollen gemeinsam vorzugsweise einen Zahnriemen od. dgl. tragen (siehe Fig. 2). Die kürzeste mögliche Kabellänge ergibt sich aus den gleichen Bedingungen wie oben erläutert, wobei durch die nähere Position der kleinen Rollen zur Bearbeitungsanordnung und den kleineren Rollendurchmesser per se eine erhebliche Verkürzung der Kabelmindestlängen möglich ist. Für derartig kurze Kabellängen werden Kits (sogenannte Short-Mode-Kits) zur Aufrüstung herkömmlicher Antriebe angeboten.

In der US 2001/0023884 A1 ist eine Draht- bzw. Kabelzuführungseinrichtung offenbart, mit zwei parallelen, auf zu einander gegenüberliegenden Seite des Kabels bzw. des Drahtes reichenden Antriebswellen. An den Enden dieser Antriebswellen sind entweder Bandführungs- und -antriebsrollen oder komplette Einheiten mit Riemenantrieb ankoppelbar. Die kompletten Einheiten sind in der Anordnung der angetriebenen Rolle und der kleineren Führungsrollen unveränderlich und auf einer gemeinsamen Trägerplatte befestigt. Die Konfiguration der Rollen in der komplett austauschbaren Einheit ist also vorgegeben und kann nicht ohne komplette Demontage an unterschiedliche Bedürfnisse adaptiert werden.

Jedoch muss für jede einzelne Bearbeitungsvorrichtung für draht- oder strangförmige Produkte das jeweils vorgegebene Antriebskonzept - Rollen oder Band - beibehalten werden und kann nicht verändert werden. Lediglich durch den Einsatz der Short-Mode-Kits besteht eine Möglichkeit der Anpassung, nämlich dem Betrieb mit oder ohne derselben.

Die WO 97/17751 A1 offenbart eine Trenn- und Abisoliervorrichtung zur Kabelverarbeitung, mit der das Kabel durchtrennt bzw. deren Isolierschicht eingeschnitten und abgezogen werden kann. Diese Vorrichtung umfasst mindestens ein Paar einander gegenüberliegende Transportanordnungen mit jeweils zumindest einem mit dem Kabel reibschlüssig zusammenwirkenden Führungs- und Fördermittel in Form eines Riemens oder einer Kabelantriebs-und -führungsrolle. Konkret wird auch die Verarbeitung im short mode für kurze Kabelabzugslängen und in herkömmlicher Konfiguration für grössere Abzugslängen beschrieben. Auch hier ist jedoch keinerlei Hinweis auf eine einfache Umstellung, ohne Demontage zwischen Short-mode und normalem Antrieb zu finden.

Aufgabe der vorliegenden Erfindung ist somit eine Antriebslösung, die alle drei bekannten Konzepte abdecken kann.

Die Aufgabe wird durch die Merkmale der unabhängigen Ansprüche 1 und 10 gelöst. Vorteilhafte Weiterbildungen sind in den Figuren und in den abhängigen Patentansprüchen dargelegt.

Ausgangspunkt ist dabei eine Vorrichtung, die mindestens ein Paar einander gegenüberliegender Transportanordnungen umfasst, welche einen Führungsspalt für das Produkt definieren, und welche jeweils zumindest ein mit dem Kabel reibschlüssig zusammenwirkendes Führungs- und Fördermittel und zumindest eine grosse Hauptrolle und zumindest eine kleine Nebenrolle aufweisen, wobei der Führungsspalt durch zumindest die einander gegenüberliegenden grossen Hauptrollen definiert ist.

Gemäss der Erfindung ist eine derartige Vorrichtung zur Lösung der gestellten Aufgabe dadurch gekennzeichnet, dass zumindest eine der kleinen Nebenrollen, vorzugsweise beide in Bezug auf den Führungsspalt einander gegenüberliegenden Nebenrollen, zwischen zumindest einer Position in Förderrichtung vor dem Berührungspunkt der jeweiligen zugehörigen Hauptrolle mit dem Produkt und zumindest einer zweiten Position in Förderrichtung hinter dem Berührungspunkt der Hauptrolle mit dem Produkt, beide Positionen in Kontakt mit dem Produkt, verstellbar ist/sind. Durch diese Merkmale ergibt sich ein flexibel je nach Applikation umrüstbare Konstruktion, die rasch und unkompliziert und mit einfachen Umbauschritten die beiden Konfigurationen eines herkömmlichen Bandantriebs als auch eines Short-Mode-Antriebs abdecken kann.

Bevorzugt ist weiter zumindest eine der kleinen Nebenrollen in eine vom Produkt abgehobene Position verstellbar, um damit einen Einzelrollen-Antrieb zu bilden, selbst bei einer Konfiguration mit aufgezogenem Antriebsriemen, der in dieser Stellung der kleinen Nebenrolle lediglich als "Beschichtung" der grossen Hauptrolle wirkt. Vorzugsweise sind beide in Bezug auf den Führungsspalt einander gegenüberliegenden Nebenrollen in dieser Weise verstellbar, um eine komplette Umstellung auf Rollen-Antrieb zu gewährleisten. Damit entsteht eine Flexibilität in den Applikationen, insbesondere auch Short-Mode und Bandantrieb, durch einen flexiblen Kabeltransportantrieb, welcher die drei in der Praxis üblichen Konfigurationen (Rollenantrieb, Bandantrieb, Short-Mode-Antrieb) in einer Lösung durch einfaches und rasches Umrüsten abdecken kann.

Um grösstmögliche Flexibilität zu erhalten, können vorzugsweise die Nebenrollen auf unterschiedlichen Seiten des Führungsspalts unabhängig voneinander verstellbar sein.

Eine weitere vorteilhafte Ausführungsform der Erfindung ist dadurch gekennzeichnet, dass zumindest eine Nebenrolle auf einem Träger montiert ist, welcher in diskreten Positionen bzw. Lagen in Bezug auf die jeweilige Hauptrolle fixierbar und zwischen diese Positionen bzw. Lagen veränderbar ist. Damit sind für eine einfache und genau reproduzierbare Umstellung genau definierbare Stellungen vorgebbar, die rasch und allenfalls auch automatisierbar einstellbar sind.

Eine erste Variante sieht dabei vor, zumindest eine Nebenrolle aussermittig, vorzugsweise an einem Ende, auf einem länglichen Trägerelement zu montieren, welches Trägerelement in Bezug auf die jeweilige Hauptrolle in zumindest zwei betreffend der Längsrichtung einander entgegengesetzten und parallel zum Führungsspalt liegenden Orientierungen fixierbar ist. Diese Konfiguration erlaubt eine rasche Umrüstung der Führung bzw. des Antriebs für das strang- bzw. drahtförmige Produkt von einem herkömmlichen Antrieb auf einen Antrieb entsprechend einem Short-Mode-Kit.

Für die genaue Vorgabe des Führungsspaltes und die reproduzierbare Genauigkeit bei jedem Umrüstvorgang ist es vorteilhaft, wenn das Trägerelement zumindest mit einer parallel zum Führungsspalt verlaufenden Führung an der Vorrichtung zusammenwirkt, beispielsweise in eine Nut eingesetzt ist.

Als weitere Variante kann vorgesehen sein, dass zumindest eine Nebenrolle aussermittig, vorzugsweise an einem Ende, auf einem länglichen Trägerelement montiert ist, welches Trägerelement um eine parallel zur Achse der Hauptrolle liegende Drehachse verschwenkbar und in zumindest zwei Stellungen fixierbar ist. Das Trägerelement ist also vorzugsweise in einer der Achse der Hauptrolle identischen bzw. vorzugsweise koaxial liegenden Drehachse verschwenkbar. Diese Konfiguration ermöglicht eine Umrüstung zwischen verschiedenen Antriebsvarianten ohne die Hauptrolle ausbauen zu müssen, da die Nebenrolle einfach um die Hauptrolle herum geschwenkt werden kann.

Eine besonders vorteilhafte Ausführungsform ist dadurch gekennzeichnet, dass das Trägerelement auf einer Scheibe montiert ist, welche um eine koaxial zur Achse der Hauptrolle liegende Achse verdrehbar und in zumindest zwei Stellungen fixierbar ist. Die Nebenrolle kann bei dieser Ausführungsform in beliebige Stellungen um die Hauptrolle geschwenkt und in diesen Stellungen fixiert werden, so wie es durch die Gegebenheit der Maschine selbst bzw. des Bearbeitungsprozesses notwendig erscheint.

Um die Vorrichtung auf im Durchmesser bzw. Querschnitt unterschiedliche Produkte einstellen zu können, ist eine vorteilhafte Ausführungsform vorgesehen, bei welcher zumindest die auf einer Seite des Führungsspalts angeordnete Transportanordnung auf einer Trägerplatte angeordnet ist. Die Trägerplatte ist zur Verkleinerung und/oder Vergrösserung des Führungsspalts relativ zur gegenüberliegenden Transportanordnung verstellbar. Vorzugsweise erfolgt diese Verstellung radial oder lateral zum Verlauf des Führungsspaltes und in einer den Führungsspalt beinhaltenden Ebene.

Die eingangs gestellte Aufgabe wird auch für eine Kabelbearbeitungsanlage, insbesondere Kabelabisolieranlage oder Kabelschneidmaschine, mit zumindest einer Kabelbearbeitungsanordnung und mindestens einer Vorrichtung zum Führen und Fördern des Kabels, dadurch gelöst, dass zumindest eine der Vorrichtungen nach einem der obigen Absätze ausgeführt ist.

Mit einer Ausführungsform, die dadurch gekennzeichnet ist, dass der Kabelbearbeitungsanordnung zumindest eine Vorrichtung nach einem der obigen Absätze vorgelagert und eine gleichartige Vorrichtung nachgelagert ist, kann der Transport der Produkte auf beiden Seiten der eigentlichen Bearbeitungsanordnung flexibel auf die jeweils optimale Konfiguration eingestellt werden. Insbesondere können mit Nebenrollen, die zu beiden Seiten der Bearbeitungsanordnung dieser Anordnung zugewandt sind, kürzeste Kabellängen geführt bzw. transportiert und damit auch bearbeitet werden.
Höchstmögliche Flexibilität ist bei einer Variante möglich, bei der die Nebenrollen der auf entgegengesetzten Seiten der Kabelbearbeitungsanordnung angeordneten Vorrichtungen unabhängig voneinander verstellbar sind.
Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.
Es zeigen dabei:
- Fig. 1: schematisch eine erste Variante einer bekannten Kabeltransportvorrichtung in Rollen-Ausführung,
- Fig. 2: schematisch eine zweite bekannte Ausführung einer Kabeltransportvorrichtung in Form eines Short-Mode-Kit,
- Fig. 3: eine Abbildung eines herkömmlichen Bandantriebs für Kabel,
- Fig. 4: eine schematische Darstellung der verschiedenen Konfigurationen, die mit der erfindungsgemässen Vorrichtung zur Führung und Förderung kabel- und strangförmiger Produkte möglich sind,
- Fig. 5a: eine Explosionsdarstellung einer ersten erfindungsgemässen Ausführungsform einer Kabeltransportvorrichtung in einer ersten Konfiguration,
- Fig. 5b: eine Explosionsdarstellung der Kabeltransportvorrichtung der Fig. 5a in einer zweiten Konfiguration,
- Fig. 6a: eine Explosionsdarstellung einer zweiten erfindungsgemässen Ausführungsform einer Kabeltransportvorrichtung in einer ersten Konfiguration,
- Fig. 6b bis 6d: die Kabeltransportvorrichtung der Fig. 6a in drei unterschiedlichen Konfigurationen.

Fig. 1 ist eine Darstellung einer bekannten Kabeltransportvorrichtung einer Seite einer Maschine zur Abisolierung von Kabeln. Zwei grosse Rollen 1a, 1b sind einander gegenüberliegend angeordnet und definieren zwischen ihren der jeweiligen anderen Rolle nächstliegenden Umfangsabschnitten einen Führungsspalt S für das zu bearbeitende Kabel K. Die eigentliche Bearbeitungsanordnung weist beispielsweise zwei einander gegenüber liegende Messer 2 auf, welche die Isolierung des Kabels K schneiden und vom Kabel K abziehen können, wenn die Rollen 1a, 1b das Kabel K entsprechend bewegen. Zwischen den Messern 2 und den Führungs- und Transportrollen 1a, 1b kann weiters eine buchsenförmige Führung 3 für den Kabelabschnitt zwischen der Bearbeitungseinrichtung 2 und den Rollen 1a, 1b vorgesehen sein.

Bei der ebenfalls bekannten Ausführungsform einer Führungs- und Transportvorrichtung in Form eines Short-Mode-Kit, dargestellt in Fig. 2, sind fix angebrachte Nebenrollen 4a, 4b vorgesehen. Über diese Nebenrollen 4a, 4b und die grossen Hauptrollen 1a, 1b ist jeweils ein Riemen 5a, 5b als Führungs- und Kraftübertragungselement gespannt. Die Nebenrollen 4a, 4b und die sich zwischen diesen Nebenrollen 4a, 4b bis zu den grossen Hauptrollen 1a, 1b erstreckenden Abschnitten der Riemen 5a, 5b ersetzen beim Short-Mode-Kit der Fig. 2 die Führung 3 der Fig. 1.

Eine weitere Variante für bekannte Transportvorrichtungen bei Kabelbearbeitungsanlagen zeigt Fig. 3. Ein Riemen 5a, 5b ist über zwei im Wesentlichen gleich grosse Rollenpaare 1a und 6a bzw. 1b und 6b gespannt, wobei die einander zugewandten Riemenabschnitte den Führungsspalt S für das Kabel K definieren. Allenfalls kann noch eine zusätzliche Andruckrolle 7a, 7b für die Riemen 5a, 5b zwischen den Rollen 1a und 6a bzw. 1b und 6b jeder Seite dieser bekannten Führungs- und Transportvorrichtung vorgesehen sein.

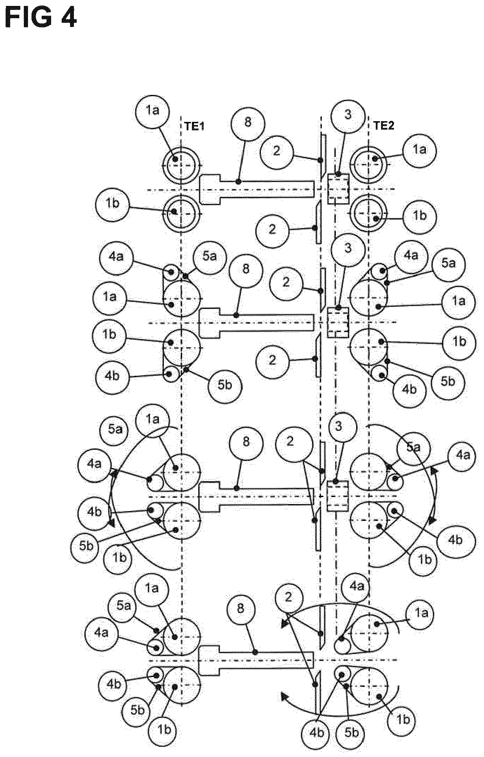

Während die Rollen- und Riemenkonfigurationen der bekannten Vorrichtungen der Fig. 1 bis 3 fix vorgegeben sind, ist gemäss dem erfindungsgemässen Vorschlag zumindest eine der kleinen Nebenrollen 4a, 4b zwischen zumindest einer Position in Förderrichtung vor dem Berührungspunkt der Hauptrolle 1a, 1b mit dem Kabel K und zumindest einer zweiten Position in Förderrichtung hinter dem Berührungspunkt der Hauptrolle 1a, 1b mit dem Kabel K verstellbar. In beiden Positionen ist die kleine Nebenrolle 4a, 4b ebenfalls über den Riemen 5a und 5b in Kontakt mit dem Kabel. Vorzugsweise werden beide Nebenrollen 4a, 4b in gleicher Weise verstellt. Mit derartig verstellbaren Nebenrollen 4a, 4b können - insbesondere wenn diese komplett ausgebaut werden können und die Hauptrollen 1a und 1b durch andere, vorzugsweise beschichtete Rollen ersetzt werden - die vier Konfigurationen der Fig. 4 einfach und rasch ineinander übergeführt werden.

Die oberste Konfiguration der Fig. 4 weist keine Nebenrollen 4a, 4b auf und entspricht damit einer Maschine mit reinen Rollenantrieben, wie beispielsweise in Fig. 1 gezeigt. Die grossen Hauptrollen 1a, 1b, vorzugsweise sowohl am Eingang als auch am Ausgang der eigentlichen Bearbeitungsanordnung - welche hier beispielsweise ein allenfalls schwenkbares Führungsrohr 8 und zwei Messer 2 umfasst - können vorteilhafterweise mit reibungserhöhenden Belägen oder Beschichtungen versehen sein, um das Kabel K sicher zu führen und die Transport- und Haltekräfte übertragen zu können.

Eine der obersten Konfiguration eines reinen Rollenantriebes entsprechende Konfiguration kann auch bei Vorhandensein von kleinen Nebenrollen 4a, 4b und Riemen 5a, 5b als Kontaktelemente zum Kabel K verwirklicht werden, wenn diese Nebenrollen 4a, 4b vorteilhafterweise in eine vom Kabel K abgehobene Position verstellbar sind, wie dies in der zweiten Zeile der Fig. 4 zu sehen ist. Allenfalls kann es - bei allen erläuterten Konfigurationen - notwendig und vorteilhaft sein, nur jeweils eine der kleinen Nebenrollen 4a, 4b auf einer Seite des Führungsspaltes S zu verstellen, wozu die Nebenrollen 4a, 4b auf unterschiedlichen Seiten des Führungsspalts S unabhängig voneinander verstellbar sein müssen.

Auch die dritte Konfiguration, in welche die erfindungsgemässe Vorrichtung durch die verstellbaren kleinen Rollen 4a, 4b rasch und einfach umgerüstet werden kann, wie in Fig. 4 dargestellt, weist einen über die grossen Rollen 1a, 1b und die kleinen Rollen 4a, 4b laufenden Riemen 5a, 5b auf und stellen einen Bandantrieb dar. Da die grossen Rollen 1a, 1b bei dieser und auch der zweiten Ausführungsform gemäss Fig. 4 aufgrund des relativ grossen Durchmessers das Kabel K nicht unmittelbar benachbart des Führungsrohrs 8 und/oder der Messer 2 greifen können, ist hier - entsprechend den bekannten Lösungen wie etwa in Fig. 1 oder Fig. 3 dargestellt - eine Führungshülse 3 zwischen der Bearbeitungsanordnung 8, 2 und der Führungs- und Transporteinrichtung 1a, 4a, 5a, 1b, 4b, 54b zwischengesetzt.

Eine Konfiguration in der Art eines Short-Mode-Kit ist in der untersten Zeile der Fig. 4 dargestellt. Hier wird das Kabel K unmittelbar nach den Messern 2 zwischen die kleinen Nebenrollen 4a, 4b und die anschliessenden Abschnitte des Riemens 5a, 5b gegriffen, geführt und auch reibschlüssig transportiert bzw. fixiert. Damit kann die Führungshülse 3 entfallen. Auf der den Messern 2 gegenüberliegenden Seite der Bearbeitungsanordnung 2, 8 kann die Führungs- und Transportvorrichtung in der Konfiguration entsprechend einem herkömmlichen Rollen- oder Bandantrieb verbleiben.

Von den vier gezeigten Konfigurationen sind die beiden obersten Varianten soweit gleich, ausser dass sie sich aus der Sicht des Kabels K dadurch unterscheiden, dass in der obersten Konfiguration die Rollen verschiedenartig sein können, während in der zweiten Konfiguration das Kabel durch eine funktional als Rolle wirkenden Anordnung aus der grossen Hauptrolle 1a, 1b und dem mit dem Kabel K eigentlich in Kontakt kommenden Riemen 5a, 5b besteht.

In der Praxis kommen je nach Anwendung verschiedenartige Rollenausbildungen vor, nämlich Gummirollen mit verschiedenen Shore-Härten, randrierte Stahlrollen bis zu diamantbeschichteten Rollen. Hintergrund dieser Varianten ist die Haftreibung, die in Konfigurationen wie im obersten Ausführungsbeispiel der Fig. 4 zur Kraftübertragung auf das Kabel K während dem Transport massgeblich ist. Nachteilig ist hier eventuell, dass für unterschiedliche Anforderungen die Rolle gewechselt werden muss.

Dagegen sind die unteren drei Konfiguration an das Material der Riemen 5a, 5b gebunden, wobei allerdings auch verschiedene Riemenbeschichtungen möglich sind. Der grosse Vorteil der unteren drei Konfigurationen besteht darin, dass ohne grossen Aufwand die Führungs- und Transportvorrichtung 1a, 4a, 5a, 1b, 4b, 5b zwischen diesen Konfigurationen umgerüstet werden kann, indem die kleine Nebenrolle 4a, 4b zwischen den dargestellten Stellungen um die grosse Hauptrolle 1a, 1b bezüglich deren Lage zu den Hauptrollen verschiedenartig positioniert und fixiert werden kann. Das kann beispielsweise durch Verschwenken der kleinen Nebenrollen 4a, 4b um eine parallel zur Achse der grossen Hauptrollen 1a, 1b liegende Schwenkachse erfolgen. Die Schwenkachse kann dabei auch mit der Achse der jeweiligen Hauptrolle 1a, 1b zusammenfallen.

Die untersten beiden Konfigurationen der Fig. 4 deckt die Situation des herkömmlichen Bandantriebes (wie in Fig. 3 gemäss dem Stand der Technik dargestellt) ab. Wesentlich sind dabei zwei direkt kraftübertragende Kontaktstellen (eine an der Tangente der grossen Hauptrolle 1a, 1b und eine weitere an der Tangente der kleinen Nebenrolle 4a, 4b). Der dazwischen liegende Abschnitt des Riemens 5a, 5b führt das Kabel K zwischen den beiden Kontaktstellen mit den Rollen 1a, 1b, 4a, 4b und verhindert insbesondere auch, dass sich dünne, biegeschlaffe Kabel zwischen den Kontaktstellen bzw. Rollen 1a, 1b, 4a, 4b verfangen können.

In der Skizze der dritten Konfiguration der Fig. 4 sind für die linke Transporteinheit die kleinen Nebenrollen 4a, 4b auf der linken Seite der grossen Hauptrollen 1a, 1b angeordnet. Selbstverständlich könnten die kleinen Nebenrollen 4a, 4b auch hier auf der rechten Seite der grossen Hauptrollen 1a, 1b angeordnet sein. Dazu sind die Achse dieser grossen Rollen 1a, 1b entsprechend nach links versetzt, damit die kleinen Rollen 4a, 4b nicht mit dem, vorzugsweise um eine Achse nahe der linken Transport-und Führungsvorrichtung schwenkbaren, Führungsrohr 8 oder eines als Ganzes aus der Kabelachse K verschiebbaren Führungselementes kollidiert.

Auf der rechten Führungs- und Transporteinheit sind die kleinen Nebenrollen 4a, 4b in der dritten Konfiguration der Fig. 4 als Bandantrieb mit Führungshülse 3 am Ausgang der Bearbeitungsanordnung 2, 8 immer auf der rechten Seite der grossen Hauptrollen 1a, 1b angeordnet. Diese Anordnung gewährleistet den Freiraum für den Umbau in die unterste Konfiguration der Fig. 4, mit Ausbau der Führung 3 und Verstellung bzw. Umbau der kleinen Rollen 4a, 4b wie gezeigt an eine der Bearbeitungsanordnung, beispielsweise den Messern 2, möglichst nahe kommende Position.

Die linke und rechte Führungs- und Transporteinheit sind vorteilhafterweise aber nicht notwendigerweise identisch. Bevorzugt ist dabei die den Messern 2 der Bearbeitungsanordnung 2, 8 abgewandte, in Fig. 4 linke Vorrichtung - ausgenommen in der obersten Rollenantrieb-Konfiguration - immer in der Konfiguration mit der Bearbeitungsanordnung 2, 8 abgewandten kleinen Nebenrollen 4a, 4b eingebaut bzw. entsprechend adaptiert. Die rechte Führungs- und Transportvorrichtung wird hingegen bevorzugt je nach Anforderung in eine der drei unteren Ausführungsformen umgerüstet.

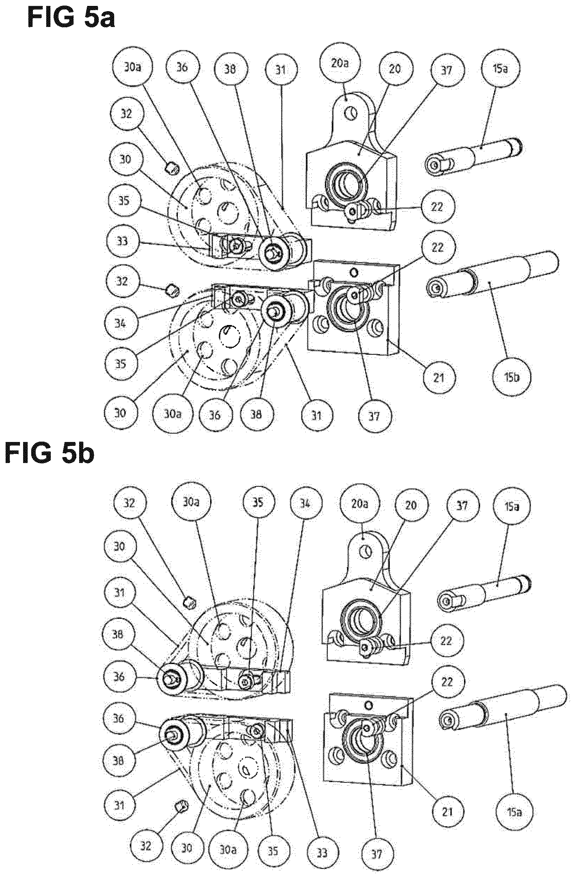

In Fig. 5a und Fig. 5b ist eine Ausführungsform einer erfindungsgemässen Führungs- und Transportvorrichtung in zwei unterschiedlichen Konfigurationen in einer Explosionsdarstellung abgebildet.

Der beispielsweise hier obere Teil der Vorrichtung ist auf einer Trägerplatte 20 aufgebaut, die sich vertikal zum Führungsspalt bzw. zur Einspannung des Kabels K bewegen kann. In allen anderen Raumachsen wird diese Trägerplatte 20 durch geeignete Führungen oder Anlenkungen stabilisiert. Die vertikale Bewegung kann entweder durch die obere Antriebswelle 15a bewirkt werden oder durch beispielsweise einen an der Zunge 20a der Trägerplatte 20 angreifenden separaten Antrieb erfolgen. Die im Betrieb rotierende Antriebswelle 15 - sowohl der oberen als auch der unteren Führungs- und Transportvorrichtung - ist in einem Rillenkugellager 37 gelagert, welches in der Trägerplatte 20 eingebaut ist. Auf der Antriebswelle 15 ist die grosse Hauptrolle 30 mit der Stellschraube 32 befestigt. Die grosse Hauptrolle 30 ist vorzugsweise verzahnt mit einem mit gleicher Verzahnungsgeometrie vesehenen, innenverzahnten, beschichteten oder unbeschichteten Zahnriemen 31. In diesem Zahnriementrieb ist die kleine Nebenrolle 36 als getriebenes Rad beteiligt. Die auch zum Spannen des Zahnriemens 31 herangezogene kleine Nebenrolle 36 ist auf einem nicht rotierenden Bolzen 38 gelagert, der vorzugsweise in einem Spannschlitten 33 als Trägerelement eingepresst ist, welcher in der Trägerplatte 20 von unten angeschlagen liegt. Die Spannung des Riemens 31 erfolgt über den Spannschlitten 33 mit dem Riemenspanner 22 in dem dieser horizontal verschoben wird. Die Fixierung des Spannschlittens 33 gegenüber der Trägerplatte 20 erfolgt durch Festziehen der Fixierschraube 35.

Der untere Teil der Führungs- und Transportvorrichtung der Fig. 5a und 5b ist auf einer Trägerplatte 21 aufgebaut, die fest stehen kann oder aber sich ähnlich wie die obere Trägerplatte in vorzugsweise der selben Ebene bewegen kann. Die vertikale Bewegung verläuft jedoch gegenläufig zu derjenigen der oberen Trägerplatte 20, damit das Kabel K eingespannt oder freigegeben bzw. die Vorrichtung auf unterschiedliche Kabeldurchmesser bzw. Kabelquerschnitte adaptiert werden kann.

Der Aufbau des unteren Teils der erfindungsgemässen Führungs- und Transportvorrichtung der Fig. 5a ist prinzipiell vorzugsweise identisch jenem des in Bezug auf den Führungsspalt S für das Kabel K gegenüberliegenden Teil. Der Spannschlitten 34 kann dabei ebenfalls ein identisches Teil wie 33 sein. Der Spannschlitten 34 könnte aber aus Platz- und Steifigkeitsgründen auch asymmetrisch ausgebildet sein. Die Platzproblematik liegt darin, dass der obere und untere Teil der erfindungsgemässen Vorrichtung für dünne Kabel nahe zusammen gefahren werden muss und andererseits das Biegeträgheitsmoment eine minimale Höhe des Spannschlittens 33, 34 erfordert, um die Kräfte aus Kabeleinspannung an der kleinen Nebenrolle 36 aufzunehmen.

Für den Rollenantrieb gemäss der obersten Konfiguration der Fig. 4 werden in der Ausführungsform der Vorrichtung gemäss Fig. 5a die grosse Hauptrolle 30, der Riemen 31 sowie der Spannschlitten 33 bzw. 34 mit der darauf montierten kleinen Nebenrolle 36 entfernt. Ebenfalls werden die nun lose in den Trägerplatten 20 liegenden Riemenspanner 22 entfernt. Direkt auf die obere Antriebswelle 15a und untere Antriebswelle 15b werden Antriebsrollen mit gleicher Geometrie montiert, jedoch vorzugsweise mit anderer Ausführung betreffend der Beschichtung. Die Befestigung für die Antriebsrollen aber auch grossen Hauptrollen 30 erfolgt mit den Stellschrauben 32.

Fig. 5b zeigt die Führungs- und Transportvorrichtung der Fig. 5a in einer umgebauten Konfiguration, die jener eines Short-Mode-Kit entspricht, wie in Fig. 2 oder in der letzten Zeile der Fig. 4 dargestellt. Dazu werden die als Trägerelemente für die kleinen Nebenrollen 36 wirkenden Spannschlitten 33, 34 ausgebaut und in entgegengesetzter Orientierung wieder eingebaut. Eine allfällige vorgesehene Führungshülse 3 nahe der Führungs- und Transportvorrichtung muss dabei ebenfalls ausgebaut werden, da in diesem Raum nach dem Umbau in die Anordnung gemäss Figur 5b die kleinen Nebenrollen 36 zu liegen kommen und an Stelle der Führung 3 das Kabel K direkt zwischen den kleinen Nebenrollen 36 und den Riemen 31 gefasst wird.

Für den Umbau werden die grossen Hauptrollen 30 nacheinander so auf den Achsen 15a und 15b gedreht, dass die hinter den Rollen liegenden Fixierschrauben 35 von vorne, vorzugsweise durch Bohrungen 30a in den grossen Hauptrollen 30, mit einem entsprechenden Werkzeug zugänglich sind. Die Fixierschrauben 35 der Spannschlitten 33 und 43 werden vollständig herausgeschraubt. Die beiden Spannschlitten 33 und 34 werden entfernt. Das beiden grossen Hauptrollen 30 werden nacheinander so auf den Achsen 15a und 15b gedreht, dass die hinter den Rollen 30 liegenden Riemenspanner 22 auf der linken Seite der Trägerplatten 20 und 21 zugänglich sind. Dann werden die Riemenspanner 22 entfernt und in die dafür vorgesehenen, rechten Bohrungen der Trägerplatten 20 und 21 eingesteckt, nachdem die grossen Hauptrollen 30 in die Position gebracht wurden, welche die entsprechenden Bohrungen frei gibt.

Die Spannschlitten 33 und 34 können nun, wenn sie symmetrisch ausgeführt sind, auf der gleichen Trägerplatte 20 bzw. 21 um 180° gedreht positioniert und mit den Fixierschrauben 35 soweit fixiert werden, dass sie in der Trägerplatte 20 bzw. 21 noch gleiten können. Für asymmetrisch ausgebildete Spannschlitten 33, 34 müssen diese getauscht angebracht werden, wie dies in Fig. 5b gezeigt ist. Das heisst, dass der vorher obere Spannschlitten 33 nun in der unteren Trägerplatte 21 positioniert und der vorher untere Spannschlitten 34 in die obere Trägerplatte 20 positioniert wird.

Nach dem Aufziehen der Riemen 31 werden durch Drehen der Riemenspanner 22 die Riemen durch die dadurch verursachte horizontale Verschiebung der Spannschlitten 33 und 34 nacheinander gespannt und mit den Fixierschrauben 35 fixiert.

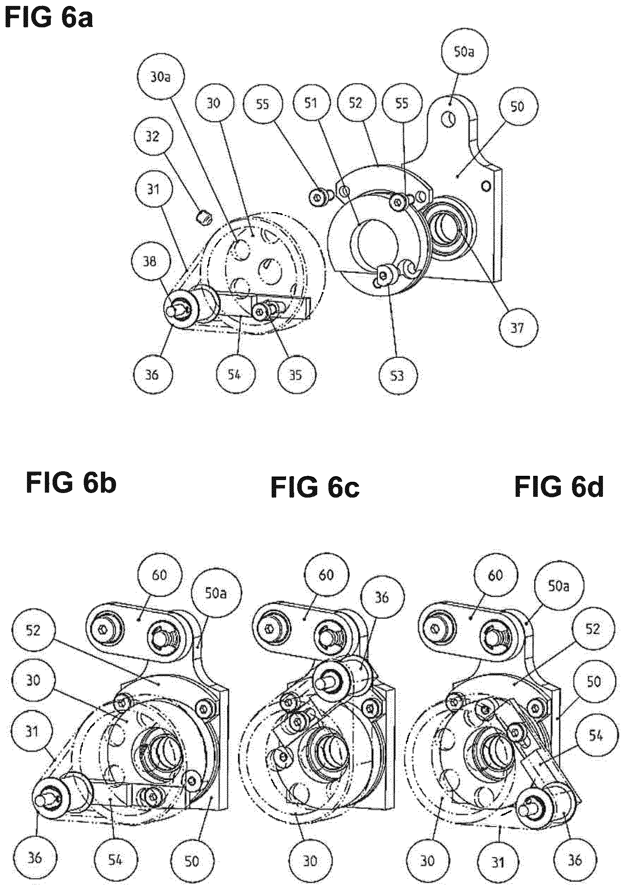

Die in den Fig. 6a bis 6d dargestellte weitere Ausführungsform einer erfindungsgemässen Führungs- und Transportvorrichtung hat den Vorteil, dass alle Teilanordnungen der Vorrichtung, d.h. die oberen, unteren als auch die auf beliebiger Seite der eigentlichen Bearbeitungsanordnung vorgesehenen Teilanordnungen, identisch ausgeführt sein können. Die Vorrichtungen sind ausgenommen in der Rollenantrieb-Konfiguration (oberste Zeile der Fig. 4) gleich ausgeführt und können in noch einfacherer Art und Weise in die anderen Konfigurationen gemäss Fig. 4 umgerüstet werden.

Der obere Teil der Vorrichtung gemäss Fig. 6a ist auf einer Trägerplatte 50 aufgebaut, die sich vorzugsweise vertikal zur Einspannung des Kabels bewegen kann. In allen anderen Raumachsen halten Führungen, Scharnier-Anlenkungen oder ähnliche Anordnungen diese Trägerplatte stabil. Die vertikale Bewegung kann entweder durch eine obere Antriebswelle (nicht dargestellt) erfolgen, die durch das Rillenkugellager 37 hindurch auf die grosse Hauptrolle 30 wirkt, oder dadurch, dass ein separater Antrieb beispielsweise mittels eines Schwenkhebels 60 (siehe Fig. 6b bis 6d) an der Lasche 50a der Trägerplatte 50 angreift. Auf der Antriebswelle ist die grosse Hauptrolle 30 mit der Stellschraube 32 befestigt. Wieder ist auf der verzahnten grossen Hauptrolle 30 und der kleinen Nebenrolle 36 vorzugsweise ein mit gleicher Verzahnungsgeometrie versehener innenverzahnter, beschichteter oder unbeschichteter Zahnriemen 31 aufgespannt.

Der Bolzen 38 zur Lagerung der kleinen Nebenrolle 36 ist bei der Ausführungsform der Fig. 6a bis Fig. 6d auf einem als Trägerelement fungierenden Spannschlitten 54 eingepresst. Dieser ist in einem Drehflansch 51 von unten angeschlagen, wobei die Spannung des Riemens 31 über den Spannschlitten 54 mit dem Riemenspanner 53 erfolgt, auf dem der Spannschlitten 54 horizontal verschoben wird. Die Fixierung des Spannschlittens 54 gegenüber dem Drehflansch 51 erfolgt durch Festziehen der Fixierschraube 35.

Der Drehflansch 51 ist auf der Trägerplatte 50 derart gelagert, dass er um die Zentrumsachse der grossen Hauptrolle 30 drehbar ist, in allen anderen Raumachsen jedoch fest steht. Die Fixierung des Drehflansches 51 gegenüber der Trägerplatte 50 erfolgt durch Festziehen der Schrauben 55 der Spannbrücke 52. Der hier untere, gegenüberliegende Teil der Führungs-und Transportvorrichtung ist um eine den Führungsspalt S enthaltende, vorzugsweise horizontal liegende Ebene gespiegelt, ansonsten identisch aufgebaut.

Um die zuletzt beschrieben Ausführungsform der Vorrichtung zwischen den in Fig. 4 unteren drei Konfigurationen zu verstellen, kann nach Lockerung der Spannbrücke 52 durch Lösen der Schrauben 55 der Drehflansch 51 verdreht werden, wodurch die kleine Nebenrolle 36 in eine beliebige der Stellungen wie in den Fig. 6b, 6c oder 6d verschwenkt wird.

Bei Verwendung einer Vorrichtung gemäss der Fig. 6a in einer Kabelbearbeitungsanlage wie schematisch in Fig. 4 dargestellt auf der rechten Seite der eigentlichen Bearbeitungsanordnung 2, 8 stellen die Fig. 6b eine Short-Mode-Kit Konfiguration, die Fig 6c eine Konfiguration in Art eines Rollenantriebs, jedoch mit dem Riemen 31 im Kontakt mit dem Kabel K, und die Fig. 6d eine Konfiguration entsprechend einem herkömmlichen Bandantrieb dar.

Die Fixierung in einer beliebigen der drei in den Fig. 6b bis 6d dargestellten Stellungen des Drehflansches 51 und damit auch der kleinen Nebenrolle 36 werden die Schrauben 55 wieder angezogen und damit der Drehflansch 51 mittels der Spannbrücke 52 fixiert.

Gegebenenfalls kann auch eine Antriebsrolle mit entsprechender Beschichtung oder Oberflächenbeschaffenheit montiert werden, ohne dass ein Riemen oder eine kleine Nebenrolle vorgesehen sind. Dazu müssen vorerst der Riemen 31 und die Hauptrolle 30 entfernt werden und der Drehflansch in eine Position gemäss Figur 6c gebracht werden.

Zwischen der jeweiligen Transporteinheit in ihrer Rollenantriebs- oder Bandantriebs-Konfiguration kann auch hier eine Führung 3 vorgesehen sein, die das Kabel K in die Transporteinheit leitet. In der Short-Mode-Konfiguration wird die Führung 3 entfernt, da die kleinen Nebenrollen 36 an deren Stelle zu liegen kommen und das Kabel K direkt zwischen den kleinen Nebenrollen 36 und/oder dem Riemen 31 gefasst wird.

Die grosse Hauptrolle 30 wird so gedreht, dass die Schrauben 55 mit einem Werkzeug durch die Bohrungen in der Hauptrolle 30 zugänglich sind.

Die Einbindung in die Kabelbearbeitungsanlage erfolgt in gleicher Weise wie im Zusammenhang mit der Fig. 4 sowie den Fig. 5a und 5b beschrieben wurde.

**Bezugszeichenliste**

| | | | |
|---|---|---|---|
| 1a, 1b | Grosse Hauptrollen | 34 | Spannschlitten |
| 2 | Kabelbearbeitungsanordnung | 35 | Fixierschraube |
| 3 | Führungsbuchse | 36 | Kleine Nebenrollen |
| 4a, 4b | Kleine Nebenrollen | 37 | Rillenkugellager |
| 5a, 5b | Riemen | 38 | Bolzen für Nebenrollen |
| 6a, 6b | Zweite grosse Rollen | 50 | Trägerplatte |
| 7a, 7b | Andruckrollen | 50a | Lasche der Trägerplatte |
| 8 | Schwenkbares Führungsrohr | 51 | Drehflansch |
| 15a, 15b | Obere Antriebswelle Untere Antriebswelle | 52 | Spannbrücke |
| 20 | Obere Trägerplatte | 53 | Riemenspanner |
| 20a | Zunge der Trägerplatte | 54 | Spannschlitten |
| 21 | Untere Trägerplatte | 55 | Fixierschraube |
| 22 | Riemenspanner | 60 | Schwenkhebel |
| 30 | Grosse Hauptrollen | K | Kabel |
| 30a | Bohrungen in grossen Hauptrollen | S | Führungsspalt für Kabel |
| 31 | Riemen | | |
| 32 | Stellschraube | | |
| 33 | Spannschlitten | | |

## Patentansprüche

1. Vorrichtung zum Führen, Positionieren und Fördern von draht- oder strangförmigen Produkten, zum Beispiel einem Kabel (K) in einer Kabelbearbeitungsanlage, insbesondere einer Kabelabisolieranlage, umfassend mindestens ein Paar einander gegenüberliegender Transportanordnungen (1a, 1b, 4a, 4b, 5a, 5b, 6a, 6b, 7a, 7b), welche einen Führungsspalt (S) für das Produkt (K) definieren, und welche jeweils zumindest ein mit dem Produkt (K) reibschlüssig zusammenwirkendes Führungs- und Fördermittel (5a, 5b) und zumindest eine grosse Hauptrolle (1a, 1b) und zumindest eine kleine Nebenrolle (4a, 4b) aufweisen, wobei der Führungsspalt (S) durch zumindest die einander gegenüberliegenden grossen Hauptrollen (1a, 1b) definiert ist, **dadurch gekennzeichnet, dass** zumindest eine der kleinen Nebenrollen (4a, 4b, 36), vorzugsweise beide in Bezug auf den Führungsspalt (S) einander gegenüberliegenden Nebenrollen, zwischen zumindest einer Position in Förderrichtung vor dem Berührungspunkt der jeweiligen zugehörigen Hauptrolle (1a, 1b, 30) mit dem Produkt (K) und zumindest einer zweiten Position in Förderrichtung hinter dem Berührungspunkt der Hauptrolle (1a, 1b, 30) mit dem Produkt (K), beide Positionen in Kontakt mit dem Produkt (K), verstellbar ist/sind.

2. Vorrichtung nach Anspruch 1, **dadurch gekennzeichnet, dass** zumindest eine der kleinen Nebenrollen (4a, 4b, 36), vorzugsweise beide in Bezug auf den Führungsspalt (S) einander gegenüberliegenden Nebenrollen, in eine vom Produkt (K) abgehobene Position verstellbar sind.

3. Vorrichtung nach Anspruch 1 oder 2, **dadurch gekennzeichnet, dass** die Nebenrollen (4a, 4b, 36) auf unterschiedlichen Seiten des Führungsspalts (S) unabhängig voneinander verstellbar sind.

4. Vorrichtung nach einem der Ansprüche 1 bis 3, **dadurch gekennzeichnet, dass** zumindest eine Nebenrolle (4a, 4b, 36) auf einem Träger (33, 34, 54) montiert ist, welcher in diskreten Positionen bzw. Lagen in Bezug auf die jeweilige Hauptrolle (1a, 1b, 30) fixierbar und zwischen diese Positionen bzw. Lagen veränderbar ist.

5. Vorrichtung nach Anspruch 4, **dadurch gekennzeichnet, dass** zumindest eine Nebenrolle (4a, 4b, 36) aussermittig, vorzugsweise an einem Ende, auf einem länglichen Trägerelement (33, 34, 54) montiert ist, welches Trägerelement (33, 34, 54) in Bezug auf die jeweilige Hauptrolle (1a, 1b, 30) in zumindest zwei betreffend der Längsrichtung einander entgegengesetzten und parallel zum Führungsspalt (S) liegenden Orientierungen fixierbar ist.

6. Vorrichtung nach Anspruch 5, **dadurch gekennzeichnet, dass** das Trägerelement (33, 34) zumindest mit einer parallel zum Führungsspalt (S) verlaufenden Führung an der Vorrichtung zusammenwirkt, beispielsweise in eine Nut eingesetzt ist.

7. Vorrichtung nach Anspruch 4, **dadurch gekennzeichnet, dass** zumindest eine Nebenrolle (4a, 4b, 36) aussermittig, vorzugsweise an einem Ende, auf einem länglichen Trägerelement (54) montiert ist, welches Trägerelement (54) um eine parallel zur Achse der Hauptrolle (30) liegende Drehachse, vorzugsweise mit einem Drehflansch (51) verschwenkbar und in zumindest zwei Stellungen fixierbar ist.

8. Vorrichtung nach Anspruch 7, **dadurch gekennzeichnet, dass** das Trägerelement (54) auf einer Scheibe (51) montiert ist, welche um eine koaxial zur Achse der Hauptrolle (30) liegende Achse verdrehbar und in zumindest zwei Stellungen fixierbar ist.

9. Vorrichtung nach einem der Ansprüche 1 bis 8, **dadurch gekennzeichnet, dass** zumindest der auf einer Seite des Führungsspalts (S) angeordnete Teil der Transportanordnung auf einer Trägerplatte (20, 50) angeordnet ist, welche relativ zum gegenüberliegenden Teil der Transportanordnung zur Verkleinerung und/oder Vergrösserung des Führungsspalts (S) verstellbar ist.

10. Kabelbearbeitungsanlage, insbesondere Kabelabisolieranlage oder Kabelschneidmaschine, mit zumindest einer Kabelbearbeitungsanordnung und mindestens einer Vorrichtung zum Führen und Fördern des Kabels, **dadurch gekennzeichnet, dass** zumindest eine der Vorrichtungen (1a, 1b, 4a, 4b, 5a, 5b, 30, 31, 36) nach einem der Ansprüche 1 bis 9 ausgeführt ist.

11. Kabelbearbeitungsanlage nach Anspruch 10, **dadurch gekennzeichnet, dass** der Kabelbearbeitungsanordnung zumindest eine Vorrichtung (1a, 1b, 4a, 4b, 5a, 5b, 30, 31, 36) nach einem der Ansprüche 1 bis 9 vorgelagert und eine gleichartige Vorrichtung (1a, 1b, 4a, 4b, 5a, 5b, 30, 31, 36) nachgelagert ist.

12. Kabelbearbeitungsanlage nach Anspruch 11, **dadurch gekennzeichnet, dass** die Nebenrollen (4a, 4b, 36) der auf entgegengesetzten Seiten der Kabelbearbeitungsanordnung (2, 8) angeordneten Vorrichtungen (1a, 1b, 4a, 4b, 5a, 5b, 30, 31, 36) unabhängig voneinander verstellbar sind.

## Claims

1. A device for guiding, positioning and conveying wire-shaped or strand-shaped products, for example, a cable (K) in a cable processing system, in particular a cable stripping system, comprising at least one pair of transport arrangements (1a, 1b, 4a, 4b, 5a, 5b, 6a, 6b, 7a, 7b) arranged opposite one another, which define a guide gap (S) for the product (K), and which each have at least one guiding and conveying means (5a, 5b) working together frictionally with the product (K) and at least one large main roller (1a, 1b) and at least one small secondary roller (4a, 4b), wherein the guide gap (S) is defined by at least the large main rollers (1a, 1b) opposing one another, **characterized in that** at least one of the small secondary rollers (4a, 4b, 36), preferably both secondary rollers, which are opposite each other with respect to the guide gap (S), is/are adjustable between at least one position in the conveying direction before the contact point of the respective associated main roller (1a, 1b, 30) with the product (K) and at least a second position in the conveying direction behind the contact point of the main roller (1a, 1b, 30) with the product (K), both positions in contact with the product (K).

2. The device according to claim 1, **characterized in that** at least one of the small secondary rollers (4a, 4b, 36), preferably both secondary rollers, which are opposite to one another with respect to the guide gap (S), are adjustable into a position raised from the product (K).

3. The device according to claim 1 or 2, **characterized in that** the secondary rollers (4a, 4b, 36) are adjustable independently of each other on different sides of the guide gap (S).

4. The device according to one of claims 1 to 3, **characterized in that** at least one secondary roller (4a, 4b, 36) is mounted on a carrier (33, 34, 54) which is fixable in discrete positions or locations with respect to the respective main roller (1a, 1b, 30) and can be varied between these positions or locations.

5. The device according to claim 4, **characterized in that** at least one secondary roller (4a, 4b, 36) is mounted eccentrically on an elongated carrier element (33, 34, 54), preferably at one end, which carrier element (33, 34, 54), in relation to the respective main roller (1a, 1b, 30), is fixable in at least two orientations lying opposite one another with respect to the longitudinal direction and parallel to the guide gap (S).

6. The device according to claim 5, **characterized in that** the carrier element (33, 34) at least works together with a guide running parallel to the guide gap (S) on the device, for example, being inserted into a groove.

7. The device according to claim 4, **characterized in that** at least one secondary roller (4a, 4b, 36) is mounted eccentrically on an elongate carrier element (54), preferably at one end, which carrier element (54) is fixable about an axis of rotation lying parallel to the axis of the main roller (30), preferably pivotable with a rotary flange (51) and in at least two positions.

8. The device according to claim 7, **characterized in that** the carrier element (54) is mounted on a disk (51) which is rotatable about an axis lying coaxial to the axis of the main roller (30) and is fixable in at least two positions.

9. The device according to one of claims 1 to 8, **characterized in that** at least the part of the transport arrangement arranged on one side of the guide gap (S) is arranged on a carrier plate (20, 50) which is adjustable relative to the opposite part of the transport arrangement for the reduction and/or enlargement of the guide gap (S).

10. A cable processing system, in particular a cable stripping system or cable cutting machine, having at least one cable processing arrangement and at least one device for guiding and conveying the cable, **characterized in that** at least one of the devices (1a, 1b, 4a, 4b, 5a, 5b, 30, 31, 36) is configured according to one of claims 1 to 9.

11. The cable processing system according to claim 10, **characterized in that** at least one device (1a, 1b, 4a, 4b, 5a, 5b, 30, 31, 36) according to one of claims 1 to 9 is arranged upstream of the cable processing arrangement and a similar device (1a, 1b, 4a, 4b, 5a, 5b, 30, 31, 36) is arranged downstream.

12. The cable processing system according to claim 11, **characterized in that** the secondary rollers (4a, 4b, 36) of the devices (1a, 1b, 4a, 4b, 5a, 5b, 30, 31, 36) arranged on opposite sides of the cable processing arrangement (2, 8) are adjustable independently of one another.

## Revendications

1. Dispositif pour le guidage, le positionnement et le transport de produits en forme de fils ou de cordons, par exemple un câble (K) dans une installation de traitement de câbles, en particulier une installation d'isolation de câbles, comprenant au moins une paire de dispositifs de transport (1a, 1b, 4a, 4b, 5a, 5b, 6a, 6b, 7a, 7b), lesquels définissent une fente de guidage (S) pour le produit (K), et lesquels présentent respectivement au moins un moyen de guidage et de transport (5a, 5b) coopérant par friction avec le produit (K) et au moins un rouleau principal (1a, 1b) et au moins un petit rouleau secondaire (4a, 4b), dans lequel la fente de guidage (S) est définie au moins par les gros rouleaux principaux (1a, 1b) opposés l'un à l'autre, **caractérisé en ce qu'**au moins l'un des petits rouleaux secondaires (4a, 4b, 36), de préférence les deux rouleaux secondaires opposés l'un à l'autre par rapport à la fente de guidage (S), peut/peuvent être déplacé(s) entre au moins une position dans la direction de transport en amont du point de contact entre le rouleau principal (1a, 1b, 30) correspondant respectif et le produit (K) et au moins une deuxième position dans la direction de transport, en aval du point de contact entre le rouleau principal (1a, 1b, 30) et le produit (K), les deux positions en contact avec le produit (K).

2. Dispositif selon la revendication 1, **caractérisé en ce qu'**au moins l'un des petits rouleaux secondaires (4a, 4b, 36), de préférence les deux rouleaux secondaires opposés l'un à l'autre par rapport à la fente de guidage (S), peut/peuvent être déplacé(s) dans une position écartée du produit (K).

3. Dispositif selon la revendication 1 ou 2, **caractérisé en ce que** les rouleaux secondaires (4a, 4b, 36) peuvent être déplacés indépendamment les uns des autres sur des côtés distincts de la fente de guidage (S).

4. Dispositif selon l'une des revendications 1 à 3, **caractérisé en ce qu'**au moins un rouleau secondaire (4a, 4b, 36) est monté sur un support (33, 34, 54), lequel peut être fixé en des positions ou à des emplacements discrets par rapport au rouleau principal (1a, 1b, 30) respectif et déplacé entre ces positions ou emplacements.

5. Dispositif selon la revendication 4, **caractérisé en ce qu'**au moins un rouleau secondaire (4a, 4b, 36) est monté de façon excentrée, de préférence à une extrémité, sur un élément de support allongé (33, 34, 54), ledit élément de support (33, 34, 54) pouvant être fixé par rapport au rouleau principal (1a, 1b, 30) respectif, dans au moins deux orientations opposées les unes aux autres dans la direction longitudinale et s'étendant parallèlement à la fente de guidage (S).

6. Dispositif selon la revendication 5, **caractérisé en ce que** l'élément de support (33, 34) coopère au moins avec un guidage s'étendant parallèlement à la fente de guidage (S) sur le dispositif, en étant par exemple inséré dans une rainure.

7. Dispositif selon la revendication 4, **caractérisé en ce qu'**au moins un rouleau secondaire (4a, 4b, 36) est monté de façon excentrée, de préférence à une extrémité, sur un élément de support allongé (54), ledit élément de support (54) pouvant être pivoté autour d'un axe de rotation s'étendant parallèlement à l'axe du rouleau principal (30), de préférence avec une bride tournante (51), et fixé dans au moins deux positions.

8. Dispositif selon la revendication 7, **caractérisé en ce que** l'élément de support (54) est monté sur un disque (51), lequel peut tourner autour d'un axe s'étendant coaxialement à l'axe du rouleau principal (30) et être fixé dans au moins deux positions.

9. Dispositif selon l'une des revendications 1 à 8, **caractérisé en ce qu'**au moins la partie du dispositif de transport disposée sur un côté de la fente de guidage (S) est disposée sur une plaque de support (20, 50), laquelle peut être déplacée par rapport à la partie opposée du dispositif de transport afin de réduire et/ou d'agrandir la fente de guidage (S).

10. Installation de traitement de câbles, en particulier une installation d'isolation de câbles ou une machine de coupe de câbles, avec au moins un dispositif de traitement de câbles et au moins un dispositif pour le guidage ou le transport du câble, **caractérisée en ce qu'**au moins l'un des dispositifs (1a, 1b, 4a, 4b, 5a, 5b, 30, 31, 36) est réalisé selon l'une des revendications 1 à 9.

11. Installation de traitement de câbles selon la revendication 10, **caractérisée en ce que** le dispositif de traitement de câbles est précédé d'au moins un dispositif (1a, 1b, 4a, 4b, 5a, 5b, 30, 31, 36) selon l'une des revendications 1 à 9 et suivi d'un dispositif (1a, 1b, 4a, 4b, 5a, 5b, 30, 31, 36) similaire.

12. Installation de traitement de câbles selon la revendication 11, **caractérisée en ce que** les rouleaux secondaires (4a, 4b, 36) des dispositifs (1a, 1b, 4a, 4b, 5a, 5b, 30, 31, 36) agencés sur des côtés opposés du dispositif de traitement de câbles (2, 8) peuvent être déplacés indépendamment les uns des autres.
